# FASCICULE DE BREVET EUROPEEN

(11) **EP 3 251 945 B1**
(45) Date de publication et mention de la délivrance du brevet: **06.03.2019**
(21) Numéro de dépôt: 17170916.5
(22) Date de dépôt: 12.05.2017
(51) Int. Cl.: B64C 13/00, B64C 13/18, G05D 1/06

(54) **PROCEDE D'OPTIMISATION DES PARAMETRES DE DECOLLAGE D'UN AERONEF**
VERFAHREN ZUR OPTIMIERUNG DER STARTPARAMETER EINES LUFTFAHRZEUGS
METHOD FOR OPTIMISING THE TAKE-OFF PARAMETERS OF AN AIRCRAFT

(30) Priorité: 03.06.2016 FR 1655093
(43) Date de publication de la demande: 06.12.2017
(73) Titulaire: Airbus Operations S.A.S., 31060 Toulouse (FR)
(72) Inventeur: DEMORTIER, Jean-Pierre, 32200 MAURENS (FR); HODGES, Colin, 31170 TOURNEFEUILLE (FR); THIERS, Cyrille, 31840 SEILH (FR); PETIT, Eric, 31300 TOULOUSE (FR); HOMEHR, Christophe, 31200 TOULOUSE (FR); LULLA, Christian, 28213 BREMEN (DE)
(74) Mandataire: Gicquel, Olivier Yves Gérard

(56) Documents cités:
- EP-A1- 1 586 969
- EP-A1- 1 684 144
- FR-A1- 2 817 535
- FR-A1- 2 894 045
- US-A1- 2010 222 946

## Description

La présente invention concerne un procédé d'optimisation des paramètres de décollage d'un aéronef et notamment d'un système pour commander automatiquement des dispositifs hypersustentateurs d'un aéronef durant le décollage.

On connaît déjà par le document brevet FR2817535, un tel système de commande des dispositifs hypersustentateurs (à savoir des becs et/ou des volets) de l'aéronef comportant des moyens d'actionnement pour déplacer les dispositifs hypersustentateurs, une unité de commande pour commander les moyens d'actionnement et un moyen pour détecter le décollage effectif de l'aéronef, correspondant au moment où les roues de l'aéronef quittent le sol. Au début de la phase de décollage, les dispositifs hypersustentateurs sont amenés dans une première position dans laquelle ils sont déployés et ladite unité de commande est conformée de manière à engendrer, au moins lorsque ledit moyen signale le décollage effectif, un ordre de commande permettant d'amener les dispositifs hypersustentateurs dans une deuxième position dans laquelle ils sont rétractés par rapport à la première position.

Avec un tel système, lors de la phase de décollage : tant que l'aéronef roule sur le sol, les dispositifs hypersustentateurs sont déployés de manière à augmenter la portance de l'aéronef, ce qui a pour conséquence de diminuer les vitesses d'envol et donc de réduire la longueur de piste nécessaire au décollage. Par conséquent, pour un type d'aéronef donné, notamment un avion de transport civil, équipé d'un tel système de commande, on peut soit augmenter sa masse, soit utiliser une piste de décollage plus courte, par rapport à un aéronef du même type non muni dudit système de commande ; et lorsque le décollage effectif est réalisé, c'est-à-dire lorsque les roues de l'aéronef quittent le sol, les dispositifs hypersustentateurs sont amenés dans une position moins déployée (c'est-à-dire moins hypersustentée) de manière à réduire la traînée, ce qui permet d'obtenir alors une pente de montée augmentée (en considérant une panne éventuelle d'un moteur) permettant un décollage en toute sécurité.

Bien qu'un tel système est satisfaisant et permet de réduire la longueur de décollage, le but de la présente invention est d'améliorer ce système afin d'augmenter la masse décollable et par conséquent le taux de remplissage.

La présente invention a pour objet un procédé d'optimisation des paramètres de décollage d'un aéronef, tel que défini dans la revendication 1.

Un tel procédé permet avantageusement de réduire la charge du pilote lors des phases de décollage lui permettant de se concentrer sur le contrôle de la trajectoire et d'optimiser les limites de longueur de piste et de pente de montée.

De façon avantageuse, le procédé comprend une étape d'affichage sur l'écran de visualisation de la position objective ainsi que de la position réelle des dispositifs hypersustentateurs.

Selon un mode de réalisation de l'invention, le levier de commande est pourvu d'une motorisation et avantageusement l'unité de commande est conformée pour amener simultanément les dispositifs hypersustentateurs et le levier de commande, via la motorisation, à la position de configuration actuelle de l'aéronef.

D'autres caractéristiques et avantages de la présente invention apparaîtront à la lecture de la description qui suit, en référence aux figures annexées qui représentent, respectivement :
- la figure 1 illustre un aéronef équipé d'un système de commande selon l'art antérieur,
- la figure 2 illustre un système de commande mettant en oeuvre un procédé selon l'invention, et
- la figure 3 illustre la position des dispositifs hypersustentateurs et la vitesse de l'aéronef en fonction des différentes étapes successives d'une phase de décollage.

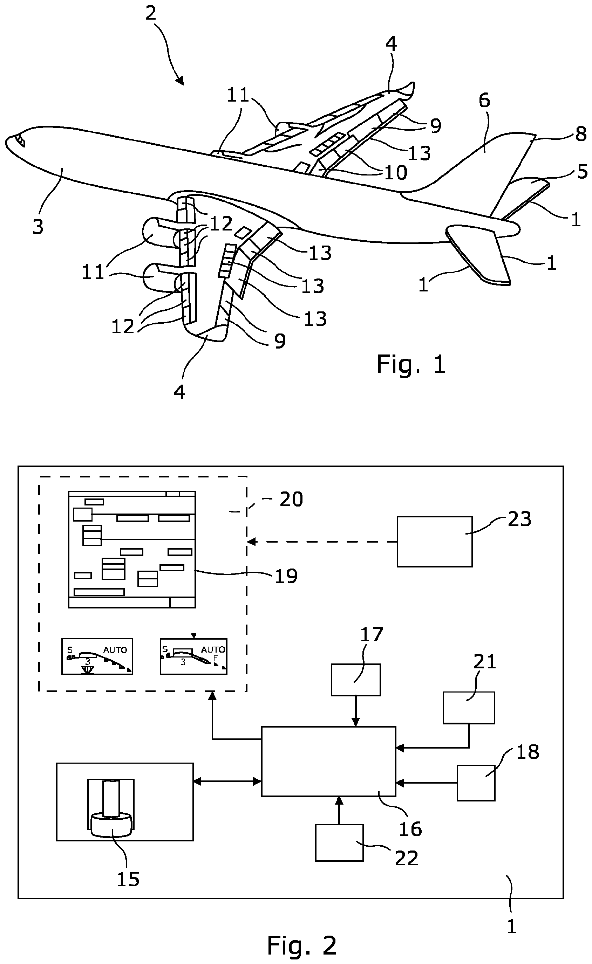

On a représenté à la Fig.1, un aéronef ou avion 2 comportant de manière classique un fuselage 3, auquel sont raccordées, entre autres, deux ailes 4 formant la voilure principale, un empennage arrière horizontal formé de deux plans stabilisateurs 5 et une dérive 6. Chacun desdits plans stabilisateurs 5 est pourvu d'une gouverne de profondeur 7, et la dérive 6 est pourvue d'une gouverne de direction 8. De plus, chacune des ailes 4 porte notamment, de façon usuelle, des ailerons 9, des spoilers 10 et de moteurs de propulsion 11, par exemple quatre ou deux moteurs.

Pour améliorer les performances de l'avion 2 au décollage, chacune desdites ailes 4 est, de plus, pourvue de dispositifs hypersustentateurs usuels, à savoir des becs 12 au bord d'attaque de l'aile 4 et des volets 13 au bord de fuite, susceptibles d'être amenés dans différentes positions ou configurations permettant d'augmenter la portance dudit aéronef 2.

Comme décrit dans le brevet FR2817535, l'aéronef 2 est pourvu d'un système 1 de commande automatique des dispositifs hypersustentateurs 12 et 13 lors de la phase de l'aéronef 2.

Ce système de commande 1, comme visible sur la Fig.2, comporte un levier de commande 15 usuel pour déplacer les dispositifs hypersustentateurs 12 et 13 dans l'une des différentes positions ou configurations possibles, à savoir « très hypersustentée » correspondant à une sortie complète respectivement des becs et des volets, « moyennement hypersustentée » dans laquelle les becs 12 et les volets 13 sont légèrement rétractés, et une position « non hypersustentée » dans laquelle les becs 12 et volets 13 sont respectivement complétement rétractés, et une unité de commande 16 configurée pour automatiquement engendrer des ordres de commandes des dispositifs hypersustentateurs 12 et 13 d'une première position correspondant à une configuration déployée au début de la phase de décollage vers une deuxième position ou configuration correspondant à une position rétractée par rapport à cette première position lorsqu'un capteur 17 transmet un signal de « décollage effectif » de l'aéronef 2 à l'unité de commande 16 ainsi que de la réception d'un signal de rétractation du train d'atterrissage par un capteur 22 et d'une confirmation de la vitesse effective de l'aéronef supérieure à une vitesse minimale de consigne de la configuration suivante disponible dans une liste des consignes disponibles.

L'unité de commande 16 est configurée pour automatiquement engendrer un ordre de rétractation depuis une première position ou configuration C1 vers la deuxième position ou configuration C2 lorsque la phase de décollage est confirmée par le capteur 17 et lorsqu'un signal de détection du verrouillage en position rentrée du train d'atterrissage est reçu du capteur 22 et ensuite que la vitesse de l'aéronef est supérieure à la vitesse minimale (VminC2) de la configuration C2 des hypersustentateurs est confirmée par l'unité.

L'unité de commande 16 est conformée pour calculer la vitesse minimale de la configuration C2 des hypersustentateurs : VminC2 qui est comparée à la vitesse actuelle de l'avion 2 provenant d'un système de mesure de l'avion 18.

Par défaut la deuxième configuration C2 après le décollage est la position suivante dans la liste des configurations disponibles pour le décollage. Par exemple, les séquences de rétractation automatique autorisées sont d'une position « très hypersustentée » vers une position « moyennement hypersustentée » ou d'une position « moyennement hypersustentée » vers « faiblement hypersustentée » ou d'une position « faiblement hypersustentée » vers « non hypersustentée ».

Avantageusement, le système 1 comprend un dispositif d'affichage 20. Ce système d'affichage 20 représente en temps réel la position du levier de commande 15, la position objective des dispositifs hypersustentateurs commandée par l'unité 16 et le mouvement et la position des dispositifs hypersustentateurs 12 et 13 de telle manière que le pilote ait la pleine conscience des consignes du système automatique, de la position actuelle des becs 12 et volets 13 et de la position du levier de commande 15.

Le système 1 de commande automatique comprend en outre une interface homme-machine 19 et un dispositif usuel de contrôle automatique 21 reliés à l'unité 16. L'interface homme-machine 19 permettant l'introduction d'une vitesse de objective V2 avant la phase de décollage qui est supérieure à la vitesse usuelle de l'avion vers 35 pieds (11 mètres) et permettant de provoquer une accélération vers cette vitesse objective V2 également synchronisée avec la rétractation du train d'atterrissage.

Cette vitesse objective V2 est déterminée en fonction des caractéristiques de décollage et de montée de l'avion considérant une panne éventuelle d'un moteur, des caractéristiques de la piste, du relief sous la trajectoire avion et des conditions atmosphériques rencontré au moment du décollage.

Un dispositif de contrôle des paramètres de décollage 23 (tels que décrit par dans le document FR2894045), mis à disposition du pilote, calcule l'ensemble des paramètres optimisés de décollage en particulier la configuration C1, la configuration C2, la vitesse de consigne de rotation VR, la vitesse V2 augmentée par rapport à la vitesse à 35 pieds, selon des paramètres de piste donnée et pour des conditions atmosphériques données de façon à maximiser la masse décollable.

Ce dispositif de contrôle des paramètres de décollage 23 calcule l'ensemble des paramètres optimisés de décollage tels que par exemple, la configuration C1, la configuration C2, la vitesse de consigne de rotation VR, la vitesse V2 augmentée par rapport à la vitesse à 35 pieds de façon à respectivement réduire la longueur de décollage et à augmenter la pente à la vitesse V2 après le décollage en considérant la panne d'un moteur.

Ainsi l'activation du dispositif de « contrôle automatique » 21 armée avant la phase de décollage permet une activation déclenchée à partir de la rétractation du train d'atterrissage, permettant ainsi une automatisation complète de l'accélération et le suivi de vitesse objective V2 dans la phase de décollage. Ainsi la charge du pilote est encore réduite.

Une telle capacité d'accélérer une fois que l'aéronef 2 a quitté le sol permet de dissocier la vitesse de décollage obtenue au passage des 35 pieds V35ft de la vitesse de montée V2. Ainsi il est possible de minimiser la vitesse de décollage réduisant encore la longueur de décollage et optimisant la vitesse utilisée en montée de façon à augmenter la pente de montée.

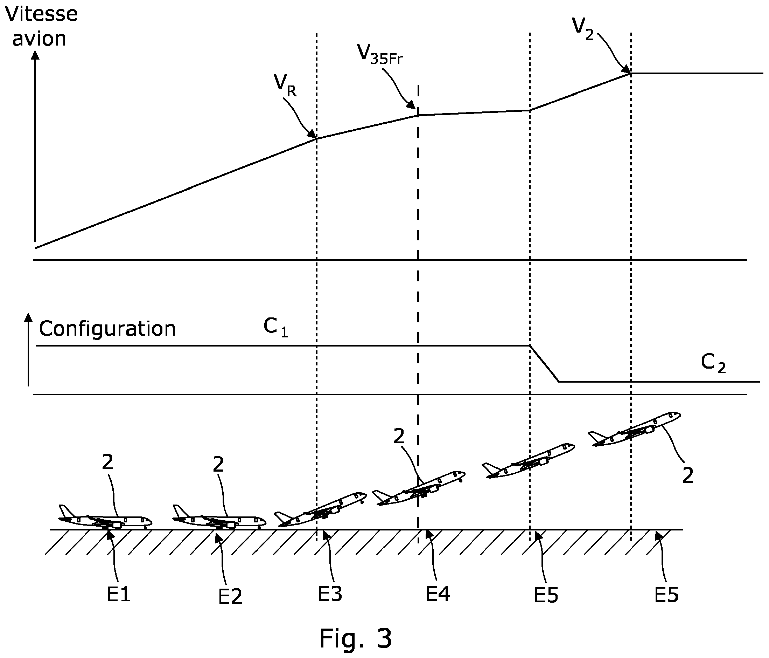

Ainsi, grâce au procédé selon l'invention visible à la Figure 3, avant la phase de décollage le pilote entre manuellement les informations concernant la première configuration C1 des dispositifs hypersustentateurs, ainsi que la vitesse d'accélération V2 et dans l'interface homme-machine 19.

Au début du décollage E1, le pilote positionne le levier de commande 15 dans la position correspondant à la configuration C1, enclenche le dispositif rétraction automatique et de « contrôle automatique » 21 ;
lorsque l'avion roule sur le sol E2, les dispositifs hypersustentateurs 12, 13 sont déployés dans la configuration C1 déterminée par le pilote à partir du dispositif de contrôle des paramètres de décollage 23 de manière à augmenter la portance, diminuant ainsi la vitesse de décollage V35ft et donc réduisant la longueur de piste ; et à la vitesse VR, à l'étape E3 le pilote agit sur la gouverne de profondeur afin d'effectuer la rotation de l'avion 2, lorsque le décollage effectif a lieu, étape E4, le pilote active la rétraction du train d'atterrissage ;
lorsque le signal de rétractation 17 du train est reçu, à l'étape E5 par l'unité 16 et que l'avion a une vitesse qui est supérieure à la vitesse minimale de consigne de la deuxième configuration C2, les dispositifs hypersustentateurs 12, 13 sont rétractés dans cette configuration C2 de manière à réduire la trainée et obtenir une pente minimale de montée (avec un moteur en panne); puis
à la réception E5 du signal de rétractation du train d'atterrissage consécutivement, l'avion 2 accélère automatiquement vers sa vitesse de consigne V2 avant de se stabiliser sur cette vitesse V2 en montée dans le cas d'une panne d'un moteur à l'étape E6.

Le niveau d'accélération est judicieusement piloté par l'unité 21 de façon à ce que l'accélération ne dégrade pas la pente de la trajectoire en deçà d'une limite

Une telle accélération synchronisée avec la rétractation du train d'atterrissage permet de dissocier la vitesse de rotation VR et la vitesse de passage à 35 pieds V35ft associée de la vitesse de montée V2. Ainsi il est possible de minimiser les vitesses de rotation VR et V35ft réduisant encore la longueur de décollage par rapport au système de commande de l'art antérieur et d'optimiser la vitesse utilisée en montée de façon à augmenter la pente en montée.

Avantageusement le système 1 permet de gérer une vitesse V2 égale à la vitesse à 35 pied, ce qui permet de stabiliser la vitesse de montée dès le passage des 35 pieds conformément à la procédure pratiquée dans l'art antérieur. Ceci à l'avantage de pouvoir bénéficier de la trainée réduite de la configuration C2 permettant d'améliorer la pente dès la rétraction du train d'atterrissage. Cette possibilité permet d'améliorer la masse décollable par rapport à l'art antérieur dans le cas d'obstacles limitants situés à proximité de la piste.

Comme décrit ci-dessus, le levier de commande 15 des dispositifs hypersustentateurs reste physiquement immobile lors de la rétraction automatique des dispositifs hypersustentateurs pendant la phase de décollage et d'accélération vers la vitesse d'accélération objective, ensuite l'avion 2 étant stabilisée à cette vitesse objective, le pilote ayant effectué toutes les actions de contrôle de l'avion et lorsque l'avion a atteint une altitude de sécurité suffisante, le pilote déplace manuellement le dit levier de commande 15 vers les positions successivement de moins en moins hypersustentées jusqu'à la rétraction complète des dispositifs hypersustentateurs.

Dans une variante de réalisation, le levier de commande 15 est pourvu d'une motorisation (non représenté) qui est relié à l'unité de commande 16 configurée pour amener simultanément le levier de commande 15 (comme mentionné ci-dessus) et les dispositifs à la position de configuration commandée.

## Revendications

1. Procédé d'optimisation des paramètres de décollage d'un aéronef (2), l'aéronef (2) comportant des dispositifs hypersustentateurs (12, 13) et un système (1) pour commander automatiquement lesdits dispositifs hypersustentateurs (12, 13), ledit système comportant un levier de commande (15) pour déplacer les dispositifs hypersustentateurs, une unité de commande (16) pour commander la rétraction des dispositifs hypersustentateurs (12, 13), une interface homme-machine pourvue d'un écran de visualisation (20) et d'une interface de saisie (19), un capteur (17) pour détecter le décollage effectif de l'aéronef, correspondant au moment où les roues de l'aéronef quittent le sol, un capteur pour détecter la rétraction des trains d'atterrissage (22), des dispositifs de mesure (18) de la vitesse de l'aéronef, et un système de contrôle automatique (21), le procédé comprenant une étape de sélection d'une première configuration des hypersustentateurs au début de la phase de décollage, **caractérisé en ce que** le procédé comprend en outre les étapes suivantes :
- sélection d'une vitesse objective (V2) de l'aéronef sur l'interface homme-machine supérieure à la vitesse de passage à 11 mètres (35 pieds),
- positionnement du levier de commande (15) sur la position de la première configuration des hypersustentateurs (C1) au début de la phase de décollage,
- activation du système de contrôle automatique (21), et **en ce qu'**à réception par l'unité de commande (16) d'un signal de détection du décollage effective de l'aéronef, de la réception d'un signal de rétraction du train d'atterrissage et d'une confirmation de la vitesse effective de l'aéronef supérieure à une vitesse minimale de consigne d'une deuxième configuration (C2) comme étant la configuration suivante dans le sens de la rétraction des hypersustentateurs et qui est intégrée dans une liste des consignes connue par l'unité (16), ladite unité (16) est conformée pour transmettre un ordre de commande permettant d'amener les dispositifs hypersustentateurs (12, 13) dans cette deuxième configuration (C2), dans laquelle les dispositifs hypersustentateurs (12, 13) sont rétractés par rapport à la première configuration (C1) et consécutivement accélérer la vitesse de l'aéronef automatiquement vers sa vitesse objective (V2).

2. Procédé selon la revendication 1, **caractérisé en ce qu'**il comprend l'étape d'affichage sur l'écran de visualisation (20) de la configuration objective des dispositifs hypersustentateurs définie par l'unité (16), de la position réelle des dispositifs hypersustentateurs (12, 13) et de la position de levier de commande (15).

3. Procédé selon l'une quelconque des revendications précédentes dans lequel le levier de commande (15) est pourvu d'une motorisation, **caractérisé en ce que** l'unité de commande (16) est conformée pour amener simultanément les dispositifs hypersustentateurs (12, 13) et le levier de commande (15), via la motorisation, à la position de configuration actuelle de l'aéronef.

4. Procédé selon l'une quelconque des revendications précédentes dans lequel le système (1) comprend un dispositif de contrôle des paramètres de décollage (23) **caractérisé en ce que** le dispositif (23) calcule l'ensemble des paramètres optimisés de décollage en particulier la première configuration (C1), la deuxième configuration (C2), une vitesse de consigne de rotation (VR), la vitesse objective (V2) augmentée par rapport à la vitesse à 11 mètres (35 pieds), selon des paramètres de piste donnée et pour des conditions atmosphériques données.

## Patentansprüche

1. Verfahren zur Optimierung der Startparameter eines Flugzeugs (2), wobei das Flugzeug (2) auftriebserhöhende Vorrichtungen (12, 13) umfasst sowie ein System (1) zur automatischen Steuerung der auftriebserhöhenden Vorrichtungen (12, 13), wobei das System Folgendes umfasst: einen Steuerhebel (15) zum Versetzen der auftriebserhöhenden Vorrichtungen, eine Steuereinheit (16) zum Steuern des Einfahrens der auftriebserhöhenden Vorrichtungen (12, 13), eine Mensch-Maschine-Schnittstelle, die mit einem Anzeigebildschirm (20) und einer Eingabeschnittstelle (19) versehen ist, einen Sensor (17) zum Erkennen des tatsächlichen Starts des Flugzeugs, entsprechend dem Moment, in dem die Räder des Flugzeugs vom Boden abheben, einen Sensor zum Erkennen des Einfahrens der Fahrwerke (22), Messvorrichtungen (18) für die Geschwindigkeit des Flugzeugs und ein automatisches Steuerungssystem (21), wobei das Verfahren einen Schritt der Auswahl einer ersten Konfiguration der auftriebserhöhenden Vorrichtungen zu Beginn der Startphase umfasst, **dadurch gekennzeichnet, dass** das Verfahren darüber hinaus die folgenden Schritte umfasst:
- Auswahl einer Zielgeschwindigkeit (V2) des Flugzeugs auf der Mensch-Maschine-Schnittstelle, die größer als die Durchgangsgeschwindigkeit bei 11 Metern (35 Fuß) ist,
- Positionierung des Steuerhebels (15) auf die Position der ersten Konfiguration der auftriebserhöhenden Vorrichtungen (C1) zu Beginn der Startphase,
- Aktivierung des automatischen Steuerungssystems (21) und dadurch, dass bei Empfang durch die Steuereinheit (16) eines Erkennungssignals für den tatsächlichen Start des Flugzeugs, des Empfangs eines Einfahrsignals des Fahrwerks und einer Bestätigung, dass die effektive Geschwindigkeit des Flugzeugs größer ist als eine minimale Sollgeschwindigkeit einer zweiten Konfiguration (C2), welche die nächste Konfiguration in der Richtung des Einfahrens der auftriebserhöhenden Vorrichtungen ist und die integriert ist in eine Liste von der Einheit (16) bekannten Sollwerten, die Einheit (16) so angepasst ist, dass sie einen Steuerbefehl sendet, mit dem die auftriebserhöhenden Vorrichtungen (12, 13) in diese zweite Konfiguration (C2) gebracht werden, in der die auftriebserhöhenden Vorrichtungen (12, 13) im Verhältnis zur ersten Konfiguration (C1) eingefahren sind und in Folge die Geschwindigkeit des Flugzeugs automatisch auf seine Sollgeschwindigkeit (V2) beschleunigt.

2. Verfahren nach Anspruch 1, **dadurch gekennzeichnet, dass** es einen Schritt der Darstellung auf dem Anzeigebildschirm (20) der von der Einheit (16) definierten Zielkonfiguration der auftriebserhöhenden Vorrichtungen, der tatsächlichen Position der auftriebserhöhenden Vorrichtungen (12, 13) und der Position des Steuerhebels (15) umfasst.

3. Verfahren nach einem der vorhergehenden Ansprüche, bei dem der Steuerhebel (15) mit einer Motorisierung versehen ist, **dadurch gekennzeichnet, dass** die Steuereinheit (16) so angepasst ist, dass sie die auftriebserhöhenden Vorrichtungen (12, 13) und den Steuerhebel (15) über die Motorisierung gleichzeitig in die Position der aktuellen Konfiguration des Flugzeugs bringt.

4. Verfahren nach einem der vorhergehenden Ansprüche, bei dem das System (1) eine Vorrichtung zur Kontrolle der Startparameter (23) umfasst, **dadurch gekennzeichnet, dass** die Vorrichtung (23) alle optimierten Startparameter berechnet, insbesondere die erste Konfiguration (C1), die zweite Konfiguration (C2), eine Sollgeschwindigkeit für die Drehung (VR), wobei die Zielgeschwindigkeit (V2) im Verhältnis zur Geschwindigkeit bei 11 Metern (35 Fuß) erhöht ist, gemäß den gegebenen Startbahnparametern und den gegebenen Witterungsverhältnissen.

## Claims

1. Method for optimizing the take-off parameters of an aircraft (2), the aircraft (2) comprising high lift devices (12, 13) and a system (1) for automatically controlling said high lift devices (12, 13), said system comprising a control lever (15) for moving the high lift devices, a control unit (16) for controlling the retraction of the high lift devices (12, 13), a human-machine interface provided with a display screen (20) and an input interface (19), a sensor (17) for detecting the actual take-off of the aircraft, corresponding to the moment when the wheels of the aircraft leave the ground, a sensor for detecting the retraction of the landing gears (22), devices for measuring (18) the speed of the aircraft, and an automatic control system (21), the method comprising a step of selecting a first configuration of the high lift devices at the start of the take-off phase, **characterized in that** the method further comprises the following steps:
- selecting an objective speed (V2) of the aircraft on the human-machine interface higher than the 11-metre (35-foot) passage speed,
- positioning the control lever (15) on the position of the first configuration of the high lift devices (C1) at the start of the take-off phase,
- activating the automatic control system (21), and **in that**, on reception by the control unit (16) of an actual aircraft take-off detection signal, of the reception of a landing gear retraction signal and a confirmation of the actual speed of the aircraft higher than a minimum setpoint speed of a second configuration (C2) as being the next configuration in the direction of retraction of the high lift devices and which is integrated in a list of the setpoints known by the unit (16), said unit (16) is configured to transmit a control command making it possible to bring the high lift devices (12, 13) into this second configuration (C2), in which the high lift devices (12, 13) are retracted relative to the first configuration (C1) and consecutively accelerate the speed of the aircraft automatically to its objective speed (V2).

2. Method according to Claim 1, **characterized in that** it comprises the step of displaying, on the display screen (20), the objective configuration of the high lift devices defined by the unit (16), the real position of the high lift devices (12, 13) and the control lever position (15).

3. Method according to either one of the preceding claims in which the control lever (15) is provided with a motor drive, **characterized in that** the control unit (16) is configured to simultaneously bring the high lift devices (12, 13) and the control lever (15), via the motor drive, to the current aircraft configuration position.

4. Method according to any one of the preceding claims in which the system (1) comprises a device for controlling the take-off parameters (23), **characterized in that** the device (23) computes all of the optimized take-off parameters, in particular the first configuration (C1), the second configuration (C2), a setpoint rotation speed (VR), the objective speed (V2) augmented relative to the 11-metre (35-foot) speed, according to given runway parameters and for given atmospheric conditions.
